# EUROPEAN PATENT SPECIFICATION

(11) **EP 0 747 747 B1**
(45) Date of publication and mention of the grant of the patent: **17.06.1998**
(21) Application number: 95942297.3
(22) Date of filing: 27.12.1995
(51) Int. Cl.: G02F 1/09

(54) **PRODUCTION METHOD OF OPTICAL DEVICE ASSEMBLY FOR OPTICAL ISOLATOR**
VERFAHREN ZUR HERSTELLUNG EINER OPTISCHEN ANORDNUNG FÜR OPTISCHEN ISOLATOR
PROCEDE DE FABRICATION D'ENSEMBLE DE DISPOSITIFS OPTIQUES POUR ISOLATEUR OPTIQUE

(30) Priority: 27.12.1994 JP 338571/94; 27.03.1995 JP 94451/95; 14.07.1995 JP 179224/95; 21.09.1995 JP 269388/95; 25.12.1995 JP 337260/95
(43) Date of publication of application: 11.12.1996
(73) Proprietor: TOKIN CORPORATION, Sendai-shi Miyagi-ken 982 (JP)
(72) Inventor: OSAWA, Ryuji, Taihaku-ku, Sendai-shi, Miyagi 982 (JP)
(74) Representative: Prüfer, Lutz H., Dipl.-Phys.
(86) International application number: JP9502740
(87) International publication number: WO9620423

(56) References cited:
- EP-A- 0 512 572
- EP-A- 0 742 467
- JP-A- 3 179 317
- JP-A- 4 333 818
- JP-A- 4 338 916
- JP-A- 6 034 861
- US-A- 5 452 122

## Description

### SPECIFICATION

### Technical Field

This invention belongs to an optical isolator utilizing the Faraday effect for use in optical communication, optical measurement, and in particular to a method of production of a plurality of optical device assemblies which are components of an optical isolator.

### Background Art

Recently, an optical communication system including a semiconductor laser as a light source and optical appliance using a semiconductor laser have become widely used and are more and more expanding in scope and scale of applications.

In order to improve the accuracy and the safety of the optical communication system and the optical appliance of the type described, it is effective to remove a return light to the semiconductor laser. As return light removing means, an optical isolator is used.

Generally, a conventional optical isolator comprises an optical device assembly composed of at least three optical devices including a polarizer, a Faraday rotator, and an analyzer which are arranged along a straight line, a permanent magnet for generating a magnetic field, and a holder for fixedly joining and protecting the optical device assembly and the permanent magnet.

Traditionally, for fixing the optical devices to one another and for fixing the optical devices to the holder, use has been made of a fixing method utilizing an organic adhesive. However, in the fixing method, it is difficult to maintain the adhesive strength over a long period. In particular, the adhesive strength is decreased due to the change in environment such as the temperature and the humidity.

In view of the above, for the optical isolator used in, for example, an optical communication repeater, which is required to have a high reliability over a long period, it is proposed that the optical isolator is formed by the use of a fixing method adopting a metal fusion-bonding method instead of the fixing method using the organic adhesive.

Adhesion by the metal fusion-bonding method is a technology which is applied and brought into practical use in a wide variety of fields such as a gas turbine blade, a vacuum window of a magnetron or a microwave electron tube, a high-power high-frequency propagation transmitter tube, and the like. In the optical isolator, the metal fusion-bonding method is used to adhere the optical devices to one another through a metallized film formed at the periphery of an aperture of each optical device or to adhere the optical devices and the holder.

Although materials of the metallized film are more or less different in dependence upon materials to be adhered, generally, in order to ensure the adhesive strength, a layer consisting of a single kind of metal selected from Cr, Ta, W, Ti, Mo, Ni, and Pt, or a layer consisting of an alloy including at least one of the above-mentioned metals is formed as an underlying layer. As a topmost layer, Au, Ni, Pt, or the like is used. Furthermore, in some cases, as an intermediate layer between the underlying layer and the topmost layer, a layer of Ni, Pt, or the like may be formed.

As a fusion-bonding metal, use is made of a soldering material such as Au-Sn alloy, Pb-Sn alloy, and Au-Ge alloy, and various kinds of brazing materials. Among those, the Au-Sn alloy soldering material having a high adhesive strength and a relatively low fusion-bonding temperature is preferred as a fixing material for metal fusion-bond because it is excellent in adhesive strength and working efficiency.

As a method of forming the above-mentioned metallized film, a wet process by plating and a dry process such as vacuum deposition and sputtering are known. Among those, the dry process is often used in order to prevent occurrence of a damage and sticking of dust on an optical surface of the optical device or an antireflection film.

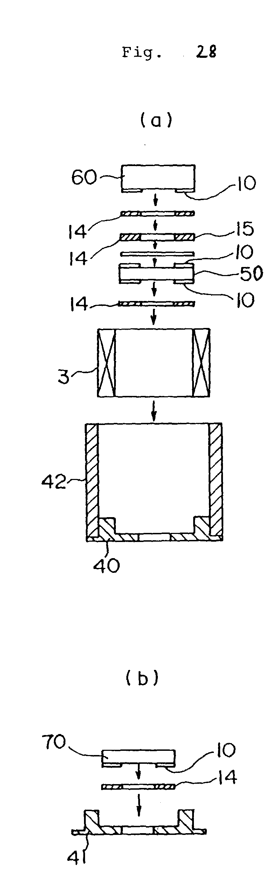

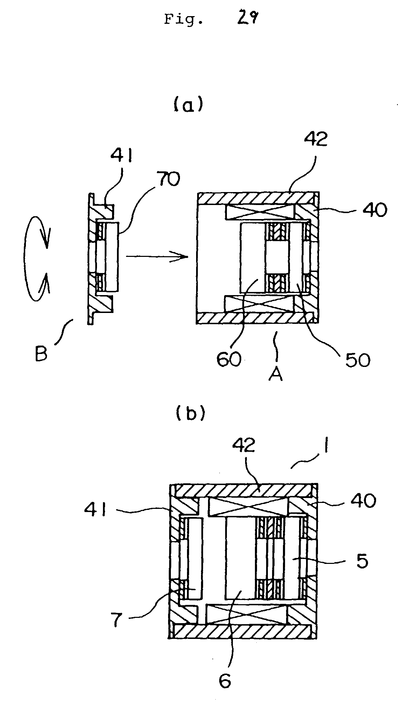

In Figs. 28 and 29, a conventional method of production of a metal fusion-bonding type optical isolator is illustrated. In the first place, as shown in Fig. 28(a), an outer holder 42 and a gold-plated end holder 40 are welded by a laser. Arranged therein are, a ring-shaped permanent magnet 3, a ring-shaped solder 14, a polarizer 50 with metallized films 10 formed on both surfaces thereof, a ring-shaped solder 14, a gold-plated inner ring 15, a ring-shaped solder 14, and a Faraday rotator 60 with metallized films 10 formed on one surface thereof, in this order. They are put into a heat treatment furnace and soldered. This component is referred to as a component A.

On the other hand, as shown in Fig. 28(b), an analyzer 70 with the metallized films 10 formed on one surface thereof is arranged upon a gold-plated end holder 41 with a ring-shaped solder 14 interposed therebetween. They are put into a heat treatment furnace and soldered. This component is referred to as a component B.

Thereafter, as shown in Fig. 29(a), a light beam having a predetermined wavelength is made to enter through an analyzer side (component B) and the analyzer 70 is rotated so that the power of light emitted from a polarizer side (component A) becomes minimum. At the position where the power of the light becomes minimum, the component B is fitted into the component A. Thereafter, the end holders 40 and 41 and the outer holder 42 are welded by a laser welding machine. Thus, the component A and the component B are combined together to form a single optical isolator 1.

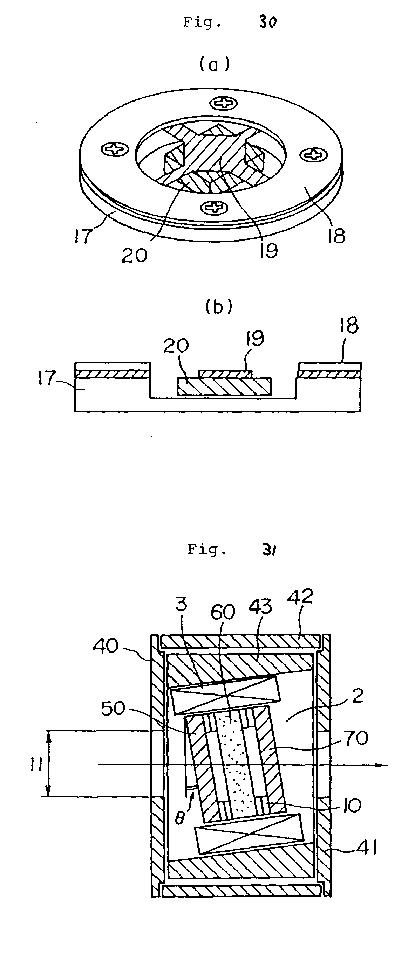

However, the conventional production method has a serious problem in mass productivity and cost. Specifically, each optical device, namely, the polarizer, the analyzer, or the Faraday rotator is manufactured by forming an antireflection film on an optical material plate having a size not less than 10mm square and by cutting it into pieces in a size of approximately 1.6mm square. Subsequently, as shown in Fig. 30, a single optical device 20 is fixed to a fixing jig comprising a supporting plate 17 and a mask holder 18. By the use of the fixing jig, the single optical device 20 is masked by a metal mask 19 in a region to become an aperture. Then, through the dry process such as the vacuum deposition and the sputtering, the metallized film having a predetermined configuration is formed.

In the conventional production method described above, too much manhour is required in a cleaning process after the optical material plate is divided into each single optical device and in a subsequent process of setting the optical device in the fixing jig. It is therefore difficult to form the metallized films on a large number of the optical devices.

As described in the foregoing, the component A is formed by soldering the polarizer, the Faraday rotator, and the end holder while the component B is formed by soldering the analyzer and the end holder. These components are fixed in pairs one by one after angle adjustment. This requires a large number of steps, which constitutes a bar to the reduction in cost.

Moreover, consideration has also been made about a method of directly soldering those optical material plates, namely, a polarizer material plate, a Faraday rotator material plate, and an analyzer material plate, each of which has such a dimension that each plate can be divided into a plurality of optical devices, and it has been tried to form a thin film of a soldering material on the metallized film made by means of vacuum deposition. However, since the area of a part in which the soldering film is formed is small in comparison with the entire area of the optical device, the efficiency of use of the soldering material is extremely poor. In order to obtain a sufficient bonding condition, it is required to use as the soldering film a thick film having a thickness not less than a few microns. This brings about an increase in cost and, therefore, this method is not practical.

EP-A-0 742 467 which forms prior art under Art. 54(3) EPC discloses a method of production of a plurality of optical device assemblies for an optical isolator, each assembly comprising at least three optical devices including a polarizier, a Faraday rotator, and an analyzer. An optical material block is prepared. Line grooves are preliminarily formed in the optical material block along cutting lines. A metallized film is formed in a portion except for regions become light transmission apertures. The optical material block is cut along the cutting lines.

US-A-5,452,122 comprises a method of production of a plurality of optical device assemblies for an optical isolator wherein a first polarizier and a second polarizer are bonded to both faces of a Faraday rotator such that the respective directions of transmitted polarization are offset from each other about the optical axes by 45°. The elements are connected with each other by an optical adhesive. Thereafter, cutting into the individual optical device assemblies is carried out.

EP-A-0 512 572 discloses a method of production of an optical device assembly for an optical isolator wherein a polarizer, a Faraday rotator, and an analyzer are fixed by fused glas applied on an outer periphery of the polarizer to be contacted with the Faraday rotator and an outer periphery of the analyzer to be contacted with the Faraday rotator. A plurality of such optical device assemblies may be manufactured using optical material plates.

It is the technical object of this invention to provide a method of production of a highly reliable optical isolator which is superior in mass production and can be manufactured at low cost.

This object is solved by a method of production of a plurality of optical device assemblies for an optical isolator comprising the features of claim 1.

Preferred developments of the invention are given in the subclaims.

### Brief Description of the Drawings

Fig. 1 is a perspective view showing a groove forming step according to a first embodiment of this invention;
Fig. 2 is a perspective view showing a metallized film forming step according to the first embodiment of this invention;
Fig. 3 shows a soldering step according to the first embodiment of this invention, (a) being a sectional view showing a state that solder is inserted into grooves, (b) being a sectional view showing a state that soldering is completed;
Fig. 4 schematically shows an operation in the first embodiment, (a) being a sectional view showing a state that a soldering material is inserted into a groove, (b) being a sectional view showing a state that the soldering material is molten;
Fig. 5 schematically shows an operation in a modification of the first embodiment, (a) being a sectional view showing a state that a soldering material is inserted into a groove, (b) being a sectional view showing a state that the soldering material is molten;
Fig. 6 shows a cutting step according to the first embodiment, (a) being a sectional view showing a state before cutting, (b) being a sectional view showing a state after cutting;
Fig. 7 is a sectional view of an isolator formed by the use of an optical device assembly which is obtained according to the first embodiment;
Fig. 8 is a perspective view showing a metallized film forming step in the modification of the first embodiment;
Fig. 9 is a perspective view showing main portions of optical material plates when a metallized film forming step is completed in a second embodiment of this invention;
Fig. 10 shows a state that an optical device assembly obtained according to the second embodiment is inserted into and bonded to a magnet, (a) being a partially cut-away perspective view showing a bonded state, (b) being a sectional view upon insertion;
Fig. 11 is a sectional view of an optical isolator formed by the use of an optical device assembly which is obtained according to the second embodiment;
Fig. 12 is a perspective view showing a metallized film forming step and a groove forming step according to a third embodiment of this invention;
Fig. 13 is a sectional view showing a soldering step and a cutting step according to the third embodiment;
Fig. 14 is a sectional view of an optical isolator formed by the use of an optical device assembly obtained according to the third embodiment;
Fig. 15 is a sectional view showing a soldering step and a cutting step according to a fifth embodiment of this invention;
Fig. 16 is a sectional view showing a soldering step and a cutting step according to a sixth embodiment of this invention;
Fig. 17 is a perspective view showing a groove forming step and a metallized film forming step according to a seventh embodiment of this invention;
Fig. 18 is a sectional view showing a soldering step and a cutting step according to the seventh embodiment;
Fig. 19 shows a chemical structural formula of a surface modifying agent used in the seventh embodiment;
Fig. 20 is a view showing a measurement result for optical isolators according to the seventh embodiment of this invention and optical isolators according to a comparative method;
Fig. 21 is a perspective view showing optical material plates after a groove forming step in a production method according to an eighth embodiment of this invention;
Fig. 22 is a perspective view schematically showing a metallized film forming step of forming metallized films on optical material plates illustrated in Fig. 21;
Fig. 23 is a perspective view showing a main portion of a metal mask for use in the metallized film forming step illustrated in Fig. 22;
Fig. 24 shows a soldering step of soldering the optical material plates illustrated in Fig. 21, (a) being a sectional view showing a state before soldering, (b) being a sectional view showing a state after soldering;
Fig. 25 is a side view showing a cutting step of cutting the optical material plates soldered and bonded as illustrated in Fig. 24;
Fig. 26 is a plan view of a metal mask used in a metallized film forming step in a comparative production method;
Fig. 27 is a graph showing a measurement result for optical isolators according to the eighth embodiment and optical isolators according to the comparative method;
Fig. 28 shows a conventional method of assembling an optical isolator, (a) being a sectional view showing a method of assembling a component A, (b) being a sectional view showing a method of assembling a component B;
Fig. 29 shows the conventional method of assembling an optical isolator, (a) being a sectional view showing a state before the component B is fitted into the component A, (b) being a sectional view showing a state after the component B is fitted into the component A;
Fig. 30 shows a conventional manner of forming a metallized film, (a) being a perspective view, (b) being a sectional view;
Fig. 31 is a sectional view of an optical isolator in which an optical device assembly is inclined by the use of a conventional inclined holder; and
Fig. 32 is a perspective view of an optical device assembly which is obtained according to the conventional production method.

### Best Mode for Embodying the Invention

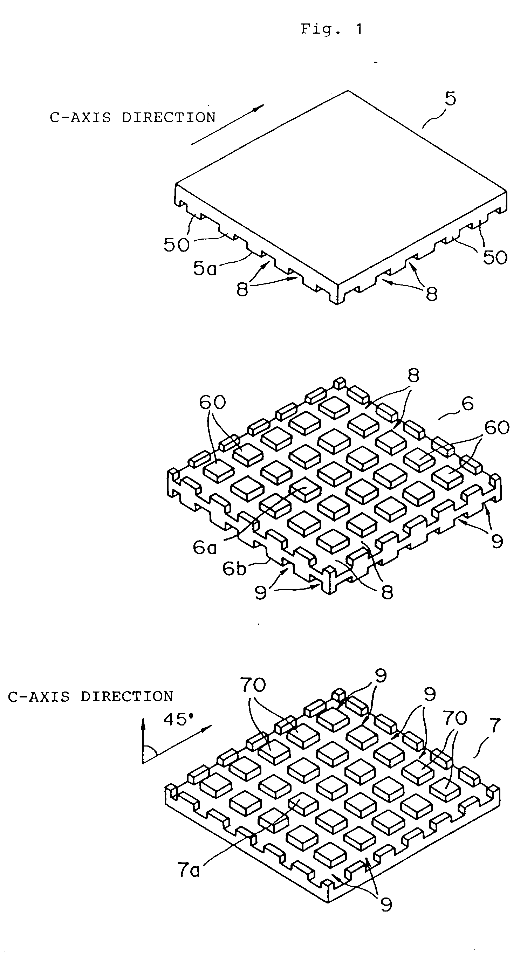

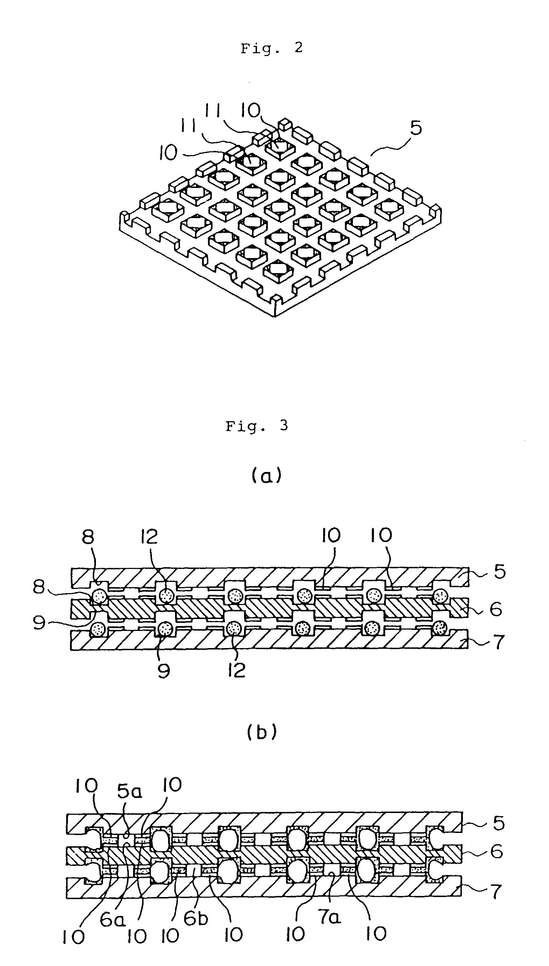

With reference to Figs. 1 through 7, description will be made as regards a first embodiment of this invention.

First, as shown in Fig. 1, preparation is made of optical material plates including a polarizer material plate 5 capable of being divided into a plurality of polarizers 50, a Faraday rotator material plate 6 capable of being divided into a plurality of Faraday rotators 60, and an analyzer material plate 7 capable of being divided into a plurality of analyzers 70. As the polarizer material plate 5 and the analyzer material plate 7, use is made of a rutile single crystal plate with antireflection films formed on both sides thereof. As the Faraday rotator material plate 6, use is made of a garnet single crystal plate with antireflection films formed on both sides thereof.

In an optical surface 5a of the polarizer material plate 50 that faces the Faraday rotator material plate 6 and in an optical surface 6a of the Faraday rotator material plate 6 that faces the polarizer material plate 5, grid-like first grooves 8 are formed so as to enable to divide each optical material plate into pieces each forming an optical device assembly. In addition, in an optical surface 6b of the Faraday rotator material plate 6 that faces the analyzer material plate 7 and in an optical surface 7a of the analyzer material plate 7 that faces the Faraday rotator material plate 6, second grooves 9 having a pattern similar to that of the first grooves 8 are formed. The grooves 8 formed on the polarizer material plate 5 extend in two directions at 0° and 90° with respect to a C axis of the rutile single crystal while the grooves 9 formed on the analyzer material plate 7 extend in two directions at 45° and 135° with respect to the C axis of the rutile single crystal.

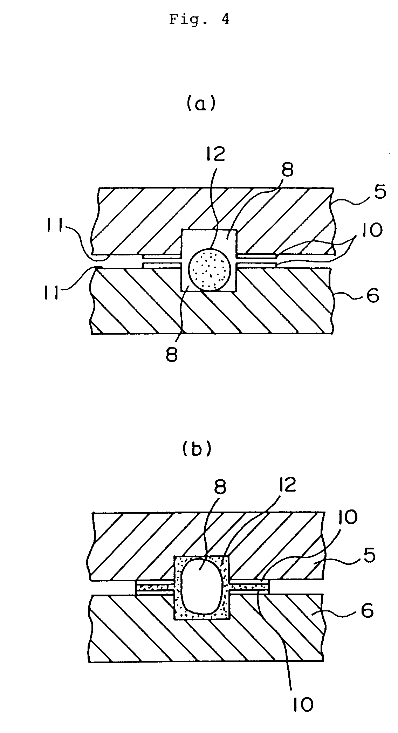

After the above-mentioned groove forming step, a metallized film 10 is formed by the use of a metal mask at a portion except for regions to become light transmission apertures 11 in each of the optical surface 5a of the polarizer material plate 5 facing the Faraday rotator material plate 6, the optical surfaces 6a and 6b of the Faraday rotator material plate 6 facing the polarizer material plate 5 and the analyzer material plate 7, respectively, and the optical surface 7a of the analyzer material plate 7 facing the Faraday rotator material plate 6. As the method forming the metallized film 10, the RF magnetron sputtering method is used with Ti/Ni/Au used as metals to form the metallized film 10 comprising a three-layered film. In Fig. 2, the metallized film 10 formed on the polarizer material plate 5 is illustrated. The similar metallized film 10 is formed on each of the Faraday rotator material plate 6 and the analyzer material plate 7.

After the above-mentioned metallized film forming step, as shown in Fig. 3(a), the optical material plates 5, 6, and 7 are stacked so that a polarizing direction of the analyzer material plate 7 is inclined substantially at 45° with respect to a polarizing direction of the polarizer material plate 5 (in this embodiment, the first grooves 8 and the second grooves 9 are put in register each other), then, stick-like soldering materials 12 are inserted into the grooves 8 and 9, molten in a heat treatment furnace, and solidified. Thus, as shown in Fig. 3(b), the optical material plates 5, 6, and 7 are soldered to one another at portions of the metallized films 10 formed on the optical surfaces 5a, 6a, 6b, and 7a. In this case, the soldering materials 12 of Au-Sn (Au: 50atm%; melting point of 418°C ) are used.

As described above, since the polarizing direction of the analyzer material plate 7 is rotated by an angle of 45° with respect to the polarizing direction of the polarizer material plate 5, it is possible to obtain the maximum light quenching ratio when an optical isolator is composed by the use of the optical device assembly obtained by this embodiment. Accordingly, by forming the grooves 8 and 9 in the polarizer material plate 5 and the analyzer material plate 7 in the above-mentioned directions, it is possible to omit the conventional adjusting step of rotating the analyzer so that the power of the light emitted from the polarizer side after entering through the analyzer side becomes minimum.

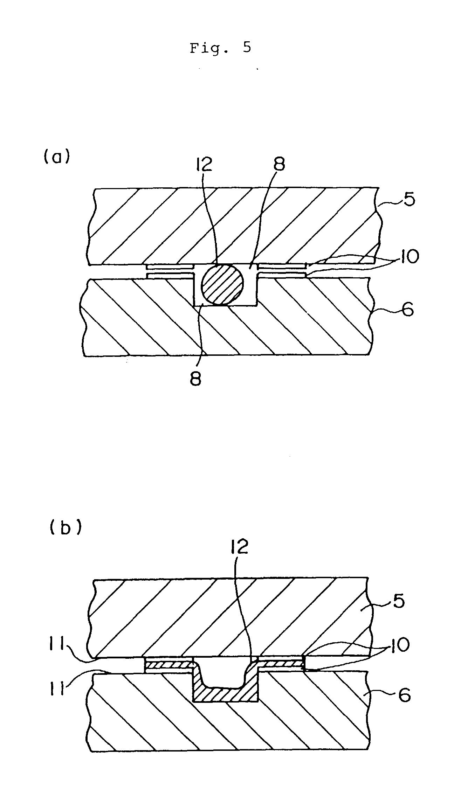

In order to obtain a satisfactory adhesive strength over a wide range in the soldering bond between the optical material plates, it is required in the soldering step that the minimum essential amount of solder flows over the entire area of the metallized film formed on the wide region on each optical material plate. In this embodiment, the soldering material 12 placed in the grooves 8 of the optical materials 5 and 6 as schematically shown in Fig. 4(a) is heated in the heat treatment furnace to become a liquid phase. Thereafter, as schematically shown in Fig. 4(b), the soldering material 12 thus molten flows in all parts of the optical material plates along the grooves 8. From the grooves 8, the essential amount of the soldering material required in soldering bond is introduced into a gap between the metallized films 10 facing each other by the capillary action. By subsequent cooling, soldering bond is carried out between the metallized films 10. In this event, an excessive amount of the soldering material 12 remains in each groove 8. Therefore, light incidence loss is prevented from being increased due to intrusion of the soldering material into light transmitting portions. Incidentally, Fig. 5(a) shows a modification where the grooves 8 are formed on only one of bonding surfaces of the optical material plates 5 and 6. In this case also, as shown in Fig. 5(b), the solder 12 in a molten state flows into the gap between the metallized films 10 alone in the manner similar to Fig. 4(b). Thus, the solder 12 in a molten state is prevented from intruding into the apertures 11.

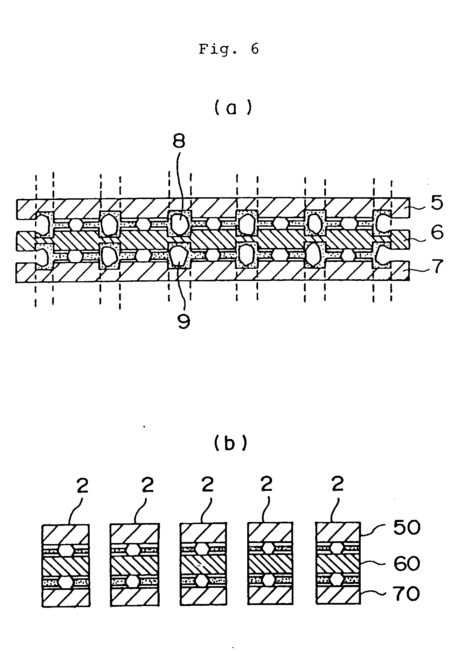

After the above-mentioned soldering step, as depicted by dotted lines in Fig. 6(a), the optical material plates 5, 6, and 7 soldered and bonded are cut into pieces along the grooves 8 and 9. Thus, the optical material plates 5, 6, and 7 soldered and bonded are cut into a plurality of optical device assemblies 2, as shown in Fig. 4(b).

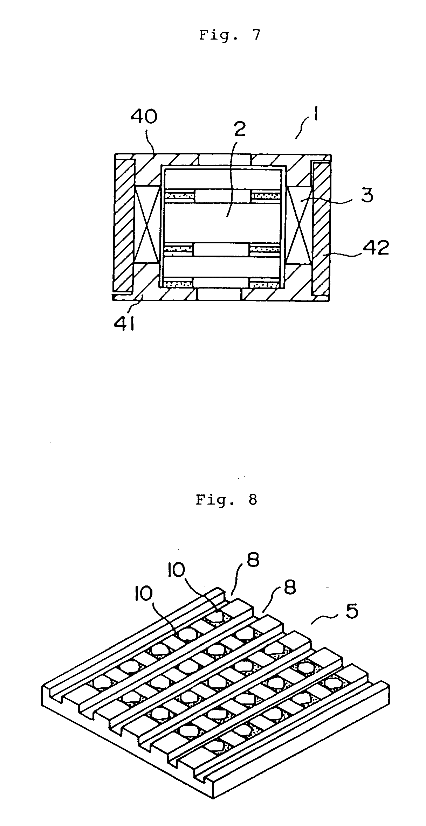

Each optical device assembly 2 obtained as mentioned above is soldered to end holders 40 and 41, a permanent magnet 3, and an outer holder 42 to manufacture an optical isolator 1 as shown in Fig. 7. A soldering material used here is Au-Sn (Au: 80atm%; melting point of 252°C ) having a melting point lower than that of the soldering material 12 for use in soldering the optical material plates.

According to the above-mentioned steps, it is possible to mass process the formation of the metallized films on the optical devices and the soldering bond between the optical devices and to drastically omit the number of steps. Therefore, reduction of the cost can be achieved.

Although a sectional configuration of the groove in the embodiment is a rectangle, the configuration may be a polygon such as a triangle and a trapezoid, a semicircle, or an ellipse as far as the soldering material can be inserted and the excessive soldering material can be reserved during soldering.

Moreover, although the grooves 8 and 9 are arranged in a grid pattern in this embodiment, the arrangement is not limited thereto. For example, the grooves 8 (9) may be arranged in parallel along one direction as in a modification shown in Fig. 8.

Furthermore, the antireflection films may be formed either before or after the formation of the groove.

In the meanwhile, the optical device assembly obtained by this embodiment is for use in a so-called single-stage optical isolator comprising three optical devices including a polarizer, a Faraday rotator, and an analyzer. However, this invention is also applicable to an optical device assembly for use in a so-called two-stage optical isolator formed by a combination of two single-stage optical isolators and composed of six optical devices. In addition, this invention is also applicable to an optical device assembly for use in a so-called one and half-stage optical isolator composed of five optical devices as an intermediate structure.

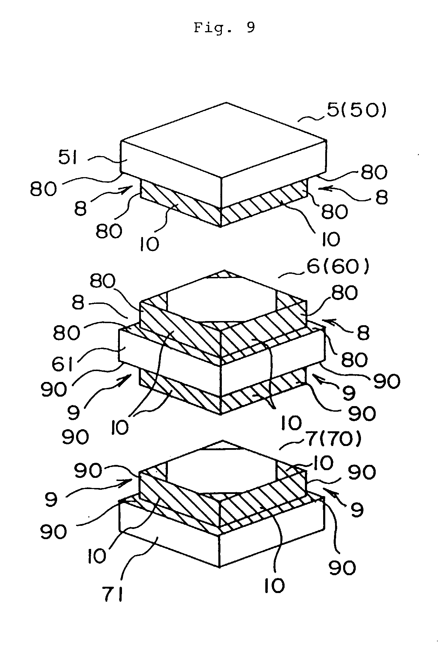

With reference to Figs. 9 to 11, description will now be made as regards a second embodiment of this invention.

This embodiment is similar to the first embodiment except for the configuration and the material of the metallized films formed in the metallized film forming step and the cutting portions of the optical material plates in the cutting step.

In Fig. 9, only one optical device for each of the three optical material plates is illustrated. As apparent from Fig. 9, in this embodiment, the metallized films 10 formed in the metallized film forming step are formed not only on the optical surfaces but also on wall surfaces 80 and 90 defining the grooves 8 and 9. The metallized film 10 comprises a three-layered film composed of an underlying film of Cr having a thickness of 0.35µ m, an intermediate film of Ni having a thickness of 0.35µ m, and a bonding film of Au having a thickness of 0.15µ m.

Thereafter, by the use of a first soldering material (Au-Sn: melting point of 280°C ) 12, the optical material plates 5, 6, and 7 are soldered and bonded to one another.

Thereafter, the optical material plates 5, 6, and 7 soldered and bonded are cut at the center of each of the grooves 8 and 9 so that those portions including the wall surfaces 80 and 90 on which the metallized films 10 are formed remain as step portions 51, 61, and 71 on side surfaces of the optical devices 50, 60, and 70, respectively. Thus, a plurality of the optical device assemblies 2 are obtained.

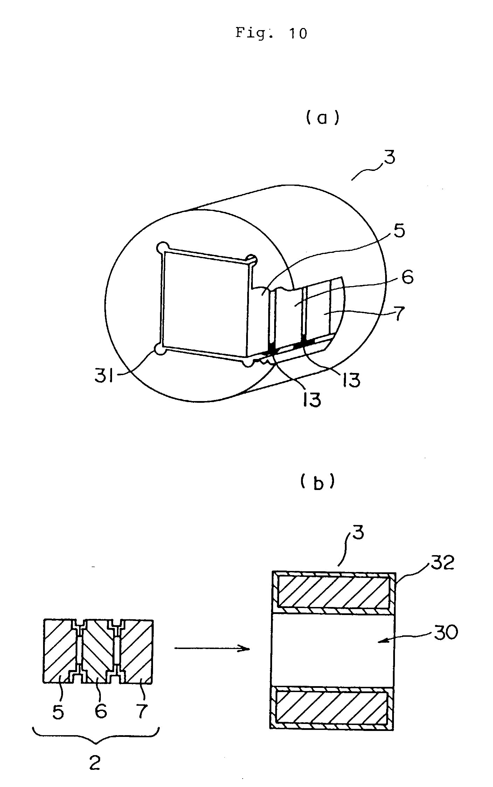

Next, as shown in Fig. 10, a permanent magnet 3 of a cylindrical shape is provided with a rectangular hole 30 extending along a central axis with escape grooves 31 formed at the four corners of the hole 30, and has a surface covered by an Ni-plated film (film thickness: 10µ m) 32. The optical device assembly 2 is inserted into the permanent magnet. By the use of a second soldering material (Pb-Sn: 175°C) 13, the optical device assembly 2 is soldered and bonded to the permanent magnet 3 through the metallized films 10 exposed at the side surfaces thereof. Thus, an optical isolator 1 is manufactured.

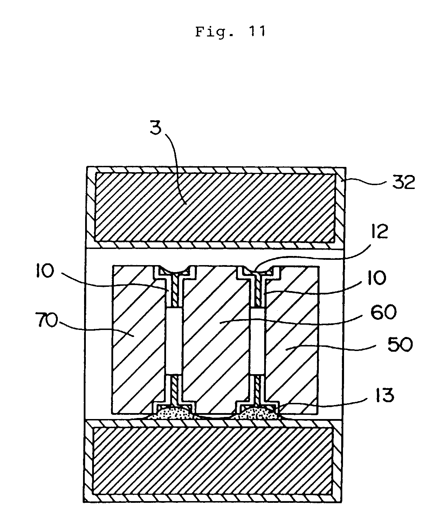

It is noted here that, in the conventional optical isolator, the soldered portions of the optical device assembly are not exposed on the side surfaces of the optical device assembly after bonded. Accordingly, the optical device assembly and the permanent magnet can not be soldered to each other by the use of these portions. In case of the optical device assembly obtained by this embodiment, the step portions 51, 61, and 71 are formed on the side surfaces of the optical devices as described above. These step portions 51, 61, and 71 are provided with the metallized films 10. In the soldering step, as shown in Fig. 11, the first soldering material 12 also flows onto the metallized films 10 formed on the step portions 51, 61, and 71. Therefore, it is possible to expose the first soldering material 12 on the side surfaces of the optical device assembly 2 after bonded. Thus, at these portions, the optical device assembly 2 can be soldered and bonded to the permanent magnet 3 by the use of the second soldering material 13.

As described above, in this embodiment, the step portions are formed in each of the optical devices and the metallized films are exposed on the side surfaces of the optical device assembly. At the portions of the first soldering material adhered to the metallized films on the side surfaces, the optical device assembly can be soldered to the permanent magnet by the second soldering material. As a result, the optical isolator can be manufactured without using the end holder and the outer holder.

It will be understood that the material of the metallized films and the soldering material are not restricted to those used in the embodiment.

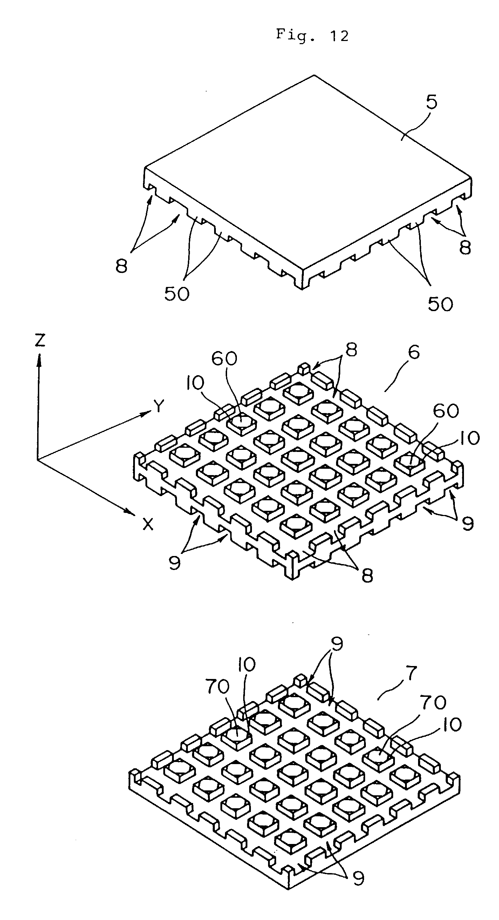

With reference to Figs. 12 through 14, description will now be made as regards a third embodiment of this invention.

In this embodiment, in order to achieve a superior characteristic, an optical axis of incident light is inclined with respect to a straight line orthogonal to the optical surfaces.

This embodiment is also basically similar to the first embodiment.

First, preparation is made of a polarizer material plate 5 having a size capable of being cut into a plurality of polarizers 50, a length and a breadth equal to each other, and a predetermined thickness, a Faraday rotator material plate 6 having a size capable of being cut into a plurality of Faraday rotators 60, a length and a breadth equal to those of the polarizer material plate 5, and a predetermined thickness, and an analyzer material plate 7 having a size capable of being cut into a plurality of analyzers 70, a length and a breadth equal to those of the polarizer material plate 5, and a predetermined thickness.

Next, a metallized films 10 are formed on one surface of the polarizer material plate 5, both surfaces of the Faraday rotator material plate 6, and one surface of the analyzer material plate 7. Thereafter, on those surfaces of the polarizer material plate 5, the Faraday rotator material plate 6, and the analyzer material plate 7 on which the metallized films 10 are formed, grooves 8 and 9 are formed in a grid pattern. As shown in Fig. 12, the optical material plates are then stacked together so that the Faraday rotator material plate 6 is sandwiched between the surface of the polarizer material plate 5 on which the metallized film 10 is formed and the surface of the analyzer material plate 7 on which the metallized film 10 is formed. The grooves 8 and 9 are formed so as to face each other when the optical material plates are stacked with their edges aligned.

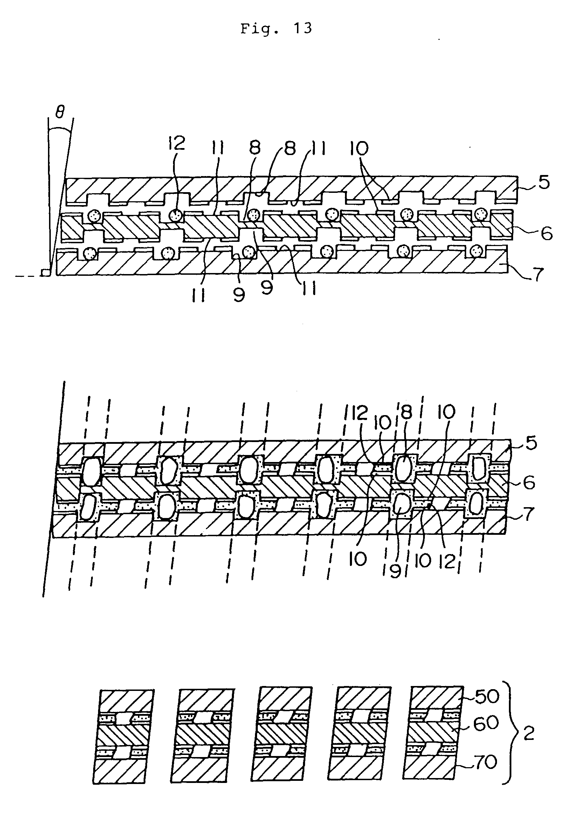

After the optical material plates are stacked, as shown in Fig. 13(a), the edges of the polarizer material plate 5, the Faraday rotator material plate 6, and the analyzer material plate 7 are located on a straight line intersecting at an angle θ ° with the line orthogonal to the optical surfaces of the optical material plates so that positions of the grooves 8 and 9 and the apertures 11 are shifted from one another. Thereafter, the soldering material 12 is inserted in the grooves 8 and 9. By shifting the optical material plates from one another as described above, an optical axis passing through the same point in each of the apertures of the optical material plates intersects at an angle θ ° with the straight line orthogonal to the optical surfaces of the optical material plates.

The inserted soldering material 12 is heated in a heat treatment furnace to become a liquid phase. Thereafter, as shown in Fig. 13(b), only an essential amount of the soldering material required in soldering bond is introduced into a gap between the metallized films 10 facing each other by the capillary action. By subsequent cooling, soldering bond is carried out. In this event, since an excessive amount of the soldering material 12 remains in the grooves 8 and 9, it is possible to prevent an increase of light incidence loss resulting from the soldering material 12 flowing into light transmitting portions.

As depicted by dotted lines in Fig. 13(b), separation is made to obtain, as each optical device assembly 2 for a single optical isolator, a portion including a set of the polarizer 50 of the polarizer material plate 5, one light transmitting region, the corresponding Faraday rotator 60 of the Faraday rotator material plate 6, one light transmitting region, the corresponding analyzer 70 of the analyzer material plate 7, and one light transmitting region as well as the metallized films 10 surrounding this set of the light transmitting regions.

Thus, as shown in Fig. 13(c), it is possible to obtain a plurality of the optical device assemblies 2 from the optical material plates soldered and bonded.

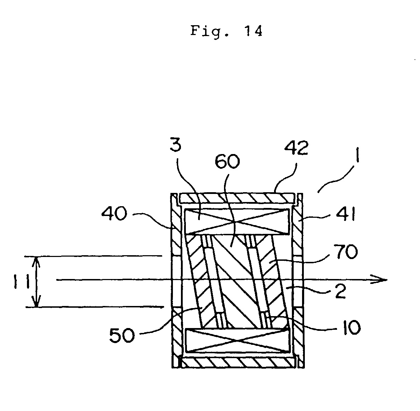

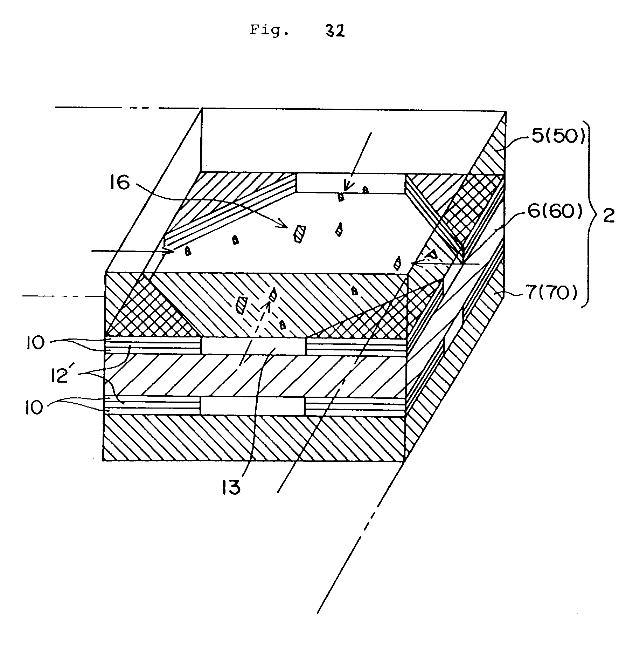

By the use of the optical device assembly 2 obtained in this embodiment, an optical isolator 1 illustrated in Fig. 14 is formed. The optical isolator 1 comprises the optical device assembly 2, a permanent magnet 3, end holders 40 and 41, and an outer holder 43. As apparent from Fig. 14, each of the optical devices 50, 60, and 70 of the optical device assembly 2 obtained in this embodiment has a hexahedral body having a parallelogrammic section. The optical device assembly 2 is located within the permanent magnet 3 and soldered to metal-plated inner walls of the permanent magnet 3. As compared with the conventional optical isolator, for example, as illustrated in Fig. 31 in which the optical device assembly 2 is inclined, the optical isolator 1 can use almost all the regions except for the portions of the metallized films 10 on the optical surfaces of the optical devices 50, 60, and 70. In other words, with the apertures of the same size, the optical device assembly obtained in this embodiment can be more miniaturized. Furthermore, since an inclining holder 43 for an inclined arrangement as required in the prior art can be omitted, it is possible to achieve miniaturization and low cost as compared with the conventional product.

A description will be made as regards a fourth embodiment of this invention.

First, in the manner similar to the third embodiment, preparation is made of a polarizer material plate 5 having a size capable of being cut into a plurality of polarizers 50, a length and a breadth equal to each other, and a predetermined thickness, a Faraday rotator material plate 6 having a length and a breadth equal to those of the polarizer material plate 5 and a predetermined thickness, and an analyzer material plate 7 having a length and a breadth equal to those of the polarizer material plate 5 and a predetermined thickness.

Then, metallized films 10 are formed on one surface of the polarizer material plate 5, both surfaces of the Faraday rotator material plate 6, and one surface of the analyzer material plate 7. Thereafter, grooves 8 and 9 are formed in a grid pattern on those surfaces of the polarizer material plate 5, the Faraday rotator material plate 6, and the analyzer material plate 7 on which the metallized films 10 are formed. In the manner similar to that illustrated in Fig. 12, the optical material plates are stacked together so that the Faraday rotator material plate 6 is sandwiched between the surface of the polarizer material plate 5 on which the metallized film 10 is formed and the surface of the analyzer material plate 7 on which the metallized film 10 is formed. It is noted here that the grooves 8 and 9 of the optical material plates 5, 6, and 7 are formed so as to be arranged along a straight line intersecting at an angle θ ° with a straight line orthogonal to the optical surfaces of the optical material plates 5, 6, and 7 when the edges of the optical material plates are aligned. With this structure, an optical axis passing through the same point in each of the apertures of the optical material plates intersects at the angle θ ° with the straight line orthogonal to the optical surfaces of the optical material plates.

After the optical material plates 5, 6, and 7 are stacked together, a soldering material 12 is inserted into each of the grooves 8 and 9. The inserted soldering material 12 is heated in a heat treatment furnace to become a liquid phase. Thereafter only an essential amount of the soldering material required in soldering bond is introduced into a gap between the metallized films 10 facing each other by the capillary action. By subsequent cooling, soldering bond is carried out.

A separation is made to obtain, as each optical device assembly 2 for a single optical isolator, a portion including a set of the polarizer 50 of the polarizer material plate 5, one light transmitting region, the corresponding Faraday rotator 60 of the Faraday rotator material plate 6, one light transmitting region, the corresponding analyzer 70 of the analyzer material plate 7, and one light transmitting region as well as the metallized films 10 surrounding this set of the light transmitting regions.

Thus, it is possible to obtain a plurality of the optical device assemblies 2 from the optical material plates soldered and bonded.

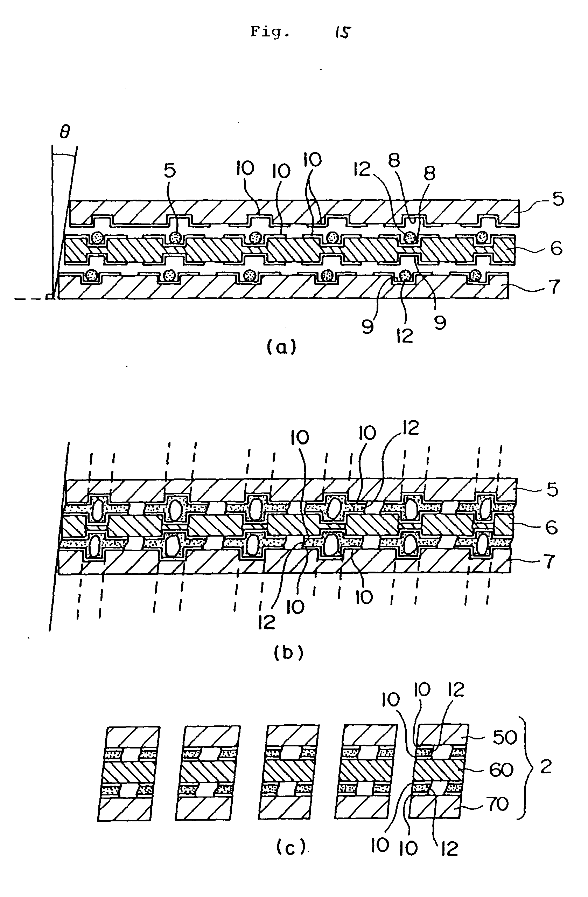

Fig. 15 is a sectional view showing the steps of a method of production of an optical device assembly according to a fifth embodiment of this invention.

This embodiment is closely similar to the third embodiment. However, although in the third embodiment the grooves 8 and 9 are formed after the metallized film 10 is formed, the order is reversed in this embodiment. Specifically, in this embodiment, grooves 8 and 9 are at first formed on one surface of a polarizer material plate 5, both surfaces of a Faraday rotator material plate 6, and one surface of an analyzer material plate 7. Herein, the grooves 8 and 9 are formed so as to be positioned face to face with each other when the optical material plates are stacked with their edges aligned. After the grooves 8 and 9 are formed, metallized films 10 are formed on the one surface of the polarizer material plate 5, the both surfaces of the Faraday rotator material plate 6, and the one surface of the analyzer material plate 7.

Thereafter, by carrying out the steps similar to those in the third embodiment, a plurality of optical device assemblies 2 are simultaneously manufactured.

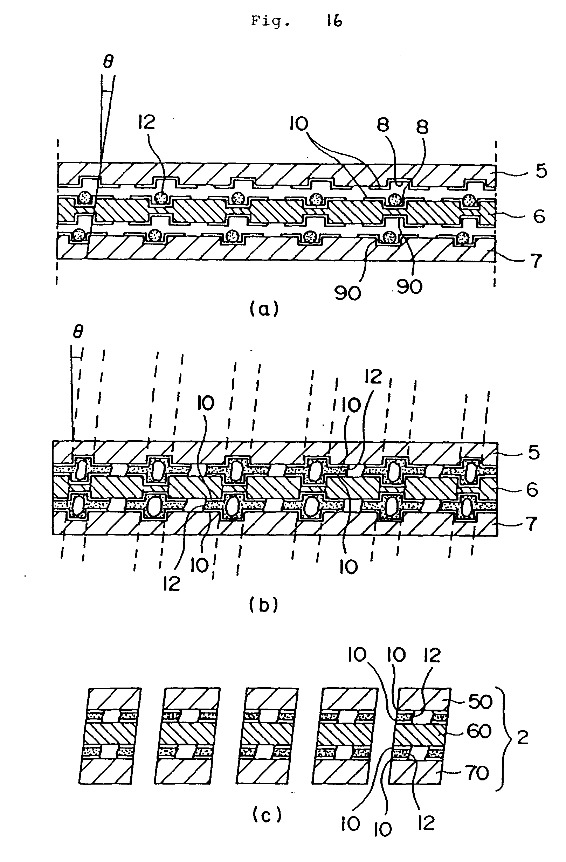

Fig. 16 is a sectional view showing the steps of a method of production of an optical device assembly according to a sixth embodiment of this invention.

This embodiment is closely similar to the fourth embodiment. However, although the grooves 8 and 9 are formed after the metallized film 10 is formed in the fourth embodiment, the order is reversed in this embodiment. Specifically, in this embodiment, grooves 8 and 9 are at first formed on one surface of a polarizer material plate 5, both surfaces of a Faraday rotator material plate 6, and one surface of an analyzer material plate 7. Herein, as shown in Fig. 16(a), the grooves 8 and 9 are formed so as to be arranged along a straight line intersecting at an angle θ ° with a straight line orthogonal to optical surfaces of the optical material plates 5, 6, and 7 when the edges of the optical material plates are aligned. After the grooves 8 and 9 are formed, metallized films 10 are formed on the one surface of the polarizer material plate 5, the both surfaces of the Faraday rotator material plate, and the one surface of the analyzer material plate 7.

Thereafter, by carrying out the steps similar to those in the fourth embodiment, a plurality of optical device assemblies 2 are simultaneously manufactured.

In the third through the sixth embodiments, soldering bond is carried out by inserting the soldering material 12 into each of the grooves 8 and 9 as illustrated in the figure. However, the soldering bond may be carried out by forming a thin film made of the soldering material on the metallized film 10 by means of vapor deposition, sputtering, or ion plating. Thus, arrangement of the soldering material is not restricted to that described in the third through the fourth (sic) embodiments.

Moreover, in the third through the sixth embodiments, the grooves 8 and 9 may be shifted in an X-axis direction alone, a Y-axis direction alone, or any desired direction between the X-axis and the Y-axis directions in Fig. 12.

In the third through the sixth embodiments, the optical material plate made of rutile single crystal is used as each of the polarizer material plate 5 and the analyzer material plate 7. As the Faraday rotator material plate 6, use is made of the optical material plate made of garnet single crystal. Each of the polarizer material plate 5, the Faraday rotator material plate 6, and the analyzer material plate 7 has a size of 11mm x 11mm in length and breadth. Each of the polarizer material plate 5 and the analyzer material plate 7 has a thickness of 0.4mm, while the Faraday rotator 6 has a thickness of 0.485mm. In addition, the angle θ ° formed between the straight line orthogonal to the optical surfaces of the optical material plates and the straight line intersecting the former straight line is equal to 4 degrees.

Description will now be made as regards a seventh embodiment characterized by addition of a surface modifying step.

In the foregoing embodiments, during the cutting step, foreign substances such as cutting powder, cooling water, a brazing material for fixing optical material may intrude between the optical material plates soldered and bonded. Such foreign substances are often difficult to be removed even by cleaning and deteriorate the yield. This embodiment prevents the above-mentioned disadvantage.

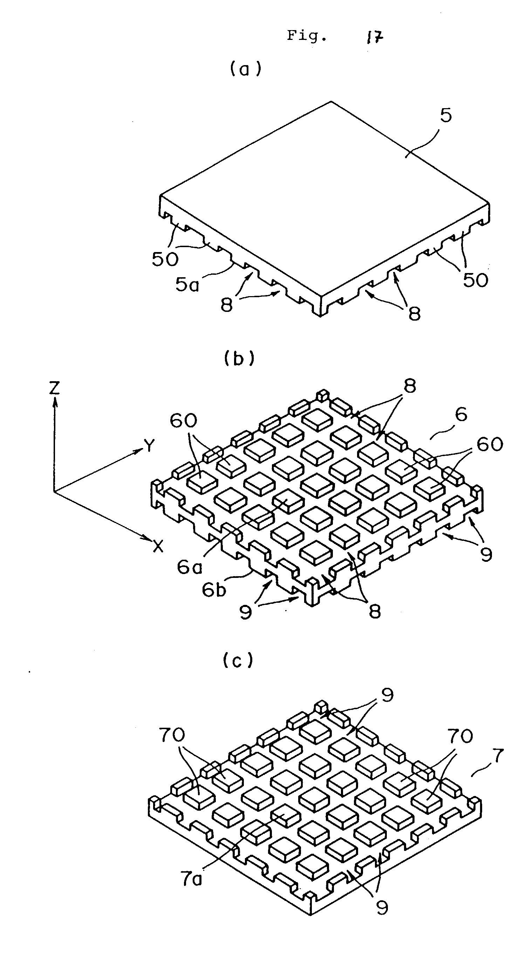

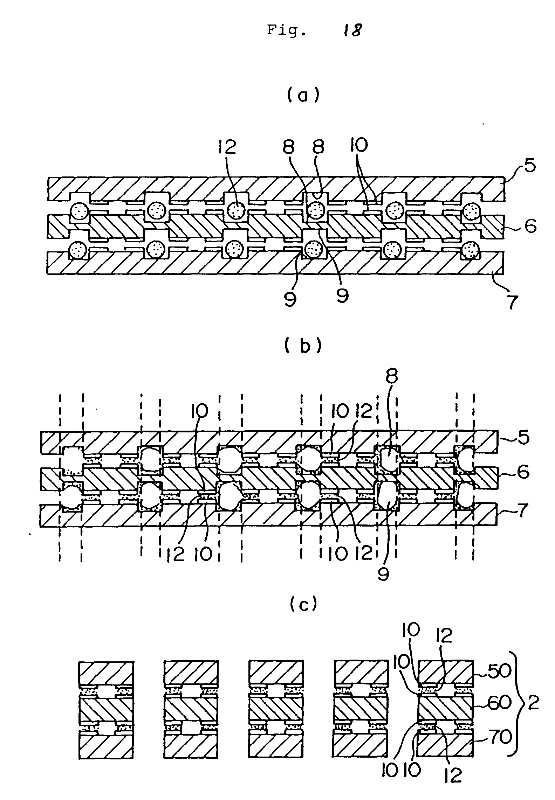

With reference to Figs. 17 through 19, description will be made as regards the seventh embodiment. As shown in Fig. 17, a planar optical material plate having a planar surface of llmm x llmm and made of rutile single crystal is used as each of a polarizer material plate 5 and an analyzer material plate 7. On the other hand, planar garnet having the same area of llmm x llmm is used as a Faraday rotator material plate 6. On the optical material plates, grooves 8 and 9 are formed in the manner similar to the first embodiment, and then metallized films 10 are formed. Thereafter, as shown in Figs. 18(a) and 18(b), the optical material plates 5, 6, and 7 are bonded to one another by the use of a soldering material 12.

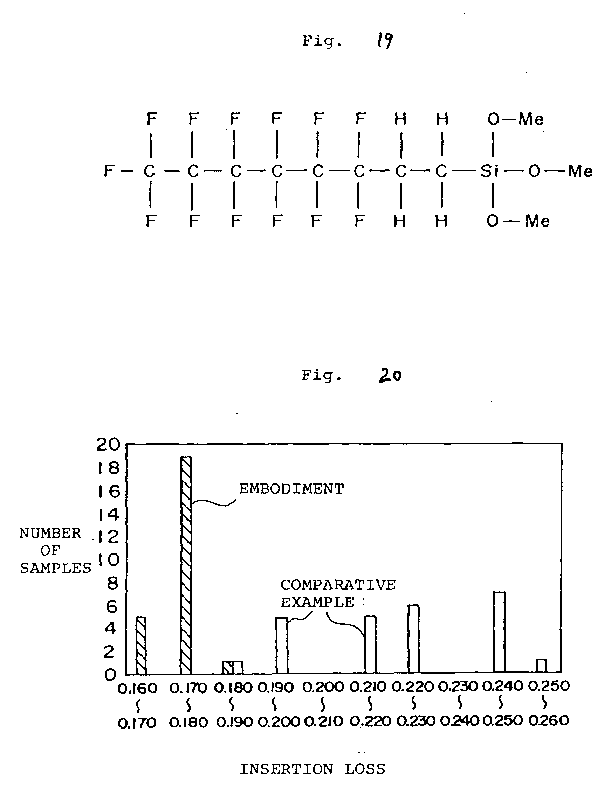

Subsequently, the optical material plates soldered and bonded are dipped for 30 minutes in a 0.5wt% solution of perfluoroalkylsilane (manufactured by Toshiba Silicone K.K.) having a chemical structural formula shown in Fig. 19 with isopropyl alcohol used as a solvent, and dried at 120°C for one hour. Thus, a surface modifying agent having water repellency is applied on the surface of each of the optical material plates 5, 6, and 7.

Thereafter, as shown in Fig. 18(c), the optical material plates soldered and bonded are cut along the grooves 8 and 9 by the use of a dicing saw to separate optical device assemblies 2 from one another for 25 optical isolators having a size of 1.6mm x 1.6mm.

Next, description will be made as regards operations and effects of this embodiment. As an antireflection film formed on the surface of the optical material, a thin film composed of two or three layers made of materials having different indexes of refraction is formed. As a topmost surface layer among those layers, SiO₂, TiO₂, and Al₂O₃ films are often used. These materials have high surface energy and are very active. These materials react to strongly attract dust such as the cutting powder, water scale, and the brazing material.

Accordingly, application of the water-repellent surface modifying agent onto the surface of the antireflection film can lower the surface energy and increase the contact angle between the cooling water or the brazing material and the surface modifying agent. Thus, it is possible to prevent the cooling water or the brazing material from intruding into a gap formed between the optical material plates. Even in case of intrusion of the cutting powder, strong adhesion can be avoided by the surface modifying agent and removal can be carried out by simple cleaning.

Herein, the water-repellent surface modifying agent is preferably made of fluororesin with a highly reactive group added at a terminal end to improve the adhesive strength with a base member. As the terminal group which most strongly reacts with SiO₂, TiO₂, and Al₂O₃ used as the antireflection film, a so-called coupling agent is generally effective. As the coupling agent, a silane coupling agent and a titanate coupling agent are known. Among those, the silane coupling agent is extremely preferred as the surface modifying agent because it reacts with the (-OH) group and the (-COOH) group on a surface of oxide to form a strong bond.

In addition, the silane coupling agent in which a functional group of a straight chain of carbon is displaced by fluorine is called fluoroalkylsilane. When applied onto the antireflection film, fluoroalkylsilane is strongly coupled with the surface and lowers the surface energy. It is therefore possible to prevent the cutting powder, the cooling water, and the brazing material for fixing the optical material from intruding into the gap during cutting. Furthermore, even if the above-mentioned dust has intruded, removal is possible by simple cleaning. Therefore, fluoroalkylsilane is particularly preferred.

In general, these coupling agents achieve a sufficient effect if the coupling agents are coated onto a surface to be treated by a thickness of a single molecule. Coating to a greater thickness makes no difference in effect. Accordingly, the modifying treatment of the optical material surface can be carried out by dipping the soldered and bonded optical material into its solution diluted by a solvent to the concentration approximately between 0.01 and 5wt% and by subsequent heat treatment.

In order to ascertain the effectiveness of this embodiment, optical device assemblies were manufactured by a production method (hereinunder referred to as comparative example") which is partially different in step from this embodiment. The comparative example is similar to this embodiment except that cutting was carried out without applying perfluoroalkylsilane.

Each of the optical device assemblies manufactured by this embodiment and the comparative example was fixed within a magnet to form an optical isolator for comparison of the light insertion loss.

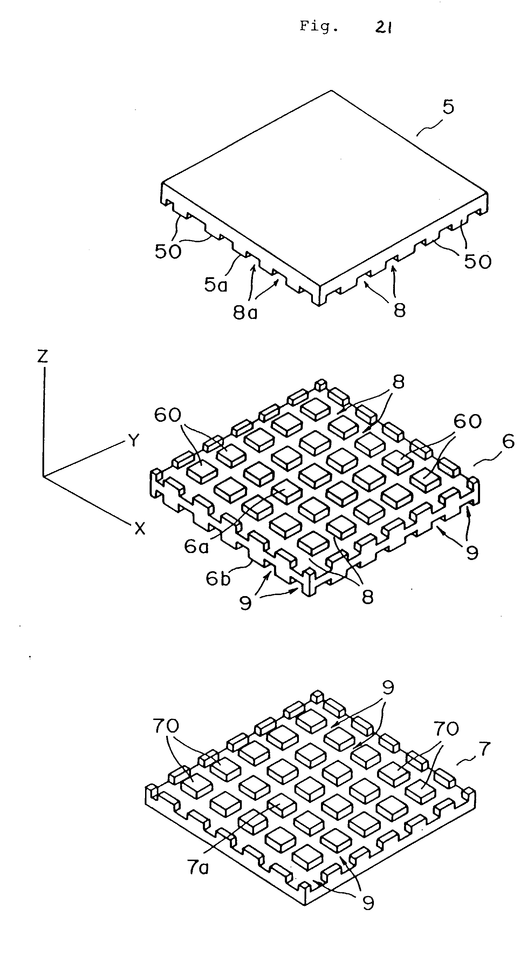

Fig. 20 shows a histogram of the insertion loss in both of the optical isolators according to this embodiment and the comparative example.

Light transmission loss of a crystal itself is equal to 0.01dB and 0.15dB per one piece of rutile single crystal and per one piece of garnet single crystal, respectively. Accordingly, three crystal pieces have the loss of 0.17dB. Most of the excess loss results from dust such as cutting powder, water scale, and a brazing material attached to the optical surface of the optical material plate during the cutting step.

As apparent from Fig. 20, the loss is great and fluctuates in the optical isolators according to the comparative example. On the other hand, in the optical isolators according to this embodiment, the loss substantially corresponds to that of the crystals themselves and is generally uniform. This shows that no dust remains in the gaps among the devices and that this embodiment provides a satisfactory effect.

As mentioned above, according to this embodiment, the water-repellent surface modifying agent is applied onto the surface of the optical material plates soldered and bonded, followed by cutting. Thus, there is provided a method of production of an optical device assembly, which is capable of preventing intrusion of cutting powder, cooling water, and a brazing material for fixing the optical materials into gaps therebetween, which is capable of removing foreign substances already intruding into the gaps by simple cleaning, and which is capable of improving the yield.

In this embodiment, dipping is used as a treating method by the use of coupling agent. However, since the intention of this embodiment is to subject the surfaces of the optical material plates to a surface treatment, the treating method is not restricted to that described in this embodiment.

In this embodiment, use is made of fluoroalkylsilane having seven straight chain carbon atoms. Modifications having different number of straight chain carbon atoms can be synthesized in dependent upon the production process and exhibit the similar effect as in this embodiment. Thus, the number of straight chain carbon atoms in fluoroalkylsilane is not restricted to that described in this embodiment.

Description will now be made in detail as regards an eighth embodiment of this invention. This embodiment has an object similar to that of the seventh embodiment.

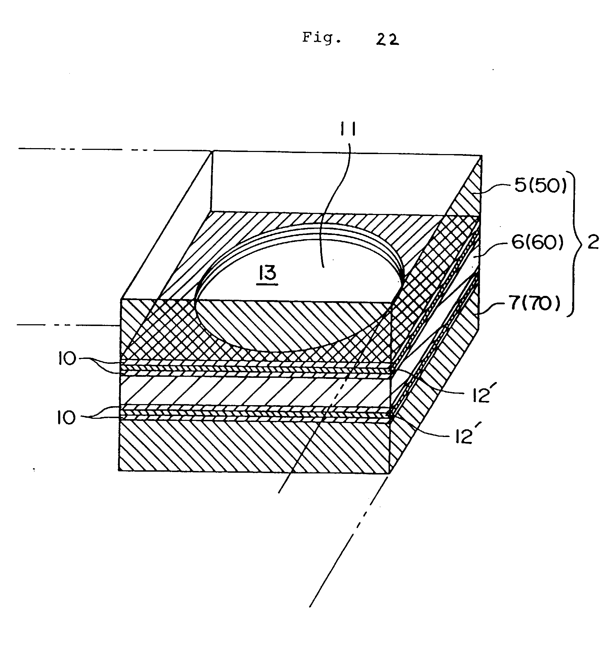

Figs. 21 through 27 will hereinafter be referred to. At first, as shown in Fig. 21, an optical material plate made of rutile single crystal (thickness of 1mm) having a size of 11mm x 11mm is used as each of a polarizer material plate 5 and an analyzer material plate 7 while garnet having a size of llmm x llmm (thickness of 0.5mm) is used as a Faraday rotator material plate 6. The polarizer material plate 5 has a size capable of being cut into a plurality of polarizers 50. Likewise, the Faraday rotator material plate 6 has a size capable of being cut into a plurality of Faraday rotators 60. Moreover, the analyzer material plate 7 has a size capable of being cut into a plurality of analyzers 7.

On each of an optical surface 5a of the polarizer material plate 5 facing the Faraday rotator material plate 6 and an optical surface 6a of the Faraday rotator material plate 6 facing the polarizer material plate 5, first grooves 8 having a pitch of 1.6mm in length and breadth are formed. On each of an optical surface 6b of the Faraday rotator material plate 6 facing the analyzer material plate 7 and an opt.ical surface 7a of the analyzer material plate 7 facing the Faraday rotator material plate 6, second grooves 9 having a pattern similar to that of the first grooves 8 are formed. The second grooves 9 are formed so as to face the first grooves 8 when a polarizing direction of the analyzer material plate 7 is inclined substantially at 45° with respect to a polarizing direction of the polarizer material plate 5. By the first and the second grooves 8 and 9, twenty-five optical device assemblies 2 of 1.6mm square are obtained.

After the above-mentioned groove forming step, metallized films 10 are formed on each of the optical surface 5a of the polarizer material plate 5 facing the Faraday rotator material plate 6, the optical surfaces 6a and 6b of the Faraday rotator material plate 6 facing the polarizer material plate 5 and the analyzer material plate 7, respectively, and the optical surface 7a of the analyzer material plate 7 facing the Faraday rotator material plate 6, as shown in Fig. 22. In this case, the metallized films 10 are formed so as not to cover the regions to become apertures 11 in the optical surfaces. The metallized films 10 define the ranges of the apertures 11 in the optical surfaces. Additionally, the metallized films 10 are formed so as to completely surround the regions to become the apertures 11. By forming the metallized films 10 in this manner, a solder layer 12' is formed between the metallized films 10 opposite to each other in the soldering step which will later be described and these metallized films 10 and the solder layer 12' completely seal a space 13 formed in the portion of each aperture 11. Therefore, it is avoided that an opening communicating with the space 13 in the portion of the aperture 11 is formed as shown in Fig. 30. Thus, in a cutting step which will later be described, no foreign substance 16 intrudes into the space 13.

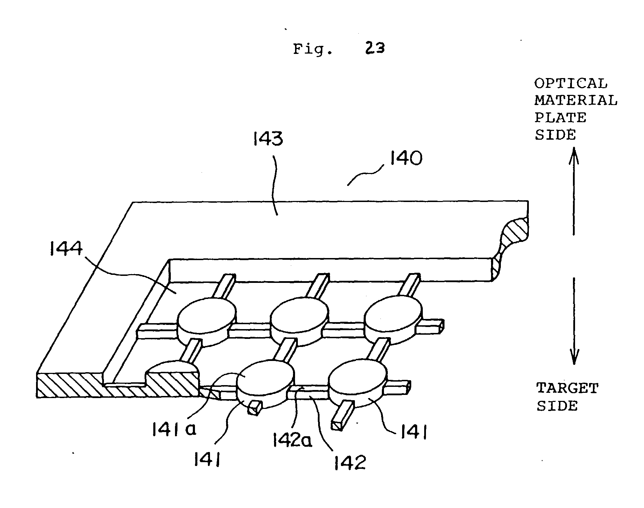

In this embodiment, the metallized films 10 are formed by sputtering. In the sputtering, use is made of a metal mask 140 shown in Fig. 23. The metal mask 140 comprises disk-shaped mask portions 141 for covering the regions to become the apertures 11, stick-like bridge portions 142 for connecting the mask portions 141 to one another, and a frame portion 143 supporting the mask portions and the bridge portions. Of course, spaces 144 are formed between the mask portions 141 and the bridge portions 142. An optical material plate side surface 142a of each bridge portion 142 is lower than an optical material plate side surface 141a of each mask portion 141 in Fig. 23. Accordingly, when the mask portions 141 cover the regions to become the apertures 11, the bridge portions 142 are separated from the optical surface. In the metal mask 140, the mask portions 141 have a diameter of ⌀ 1.45mm and the bridge portions 142 have a width of 0.2mm. The thickness of the mask portions 141 and the frame portions 143 is equal to 0.2mm and the thickness of the bridge portions 142 is equal to 0.1mm.

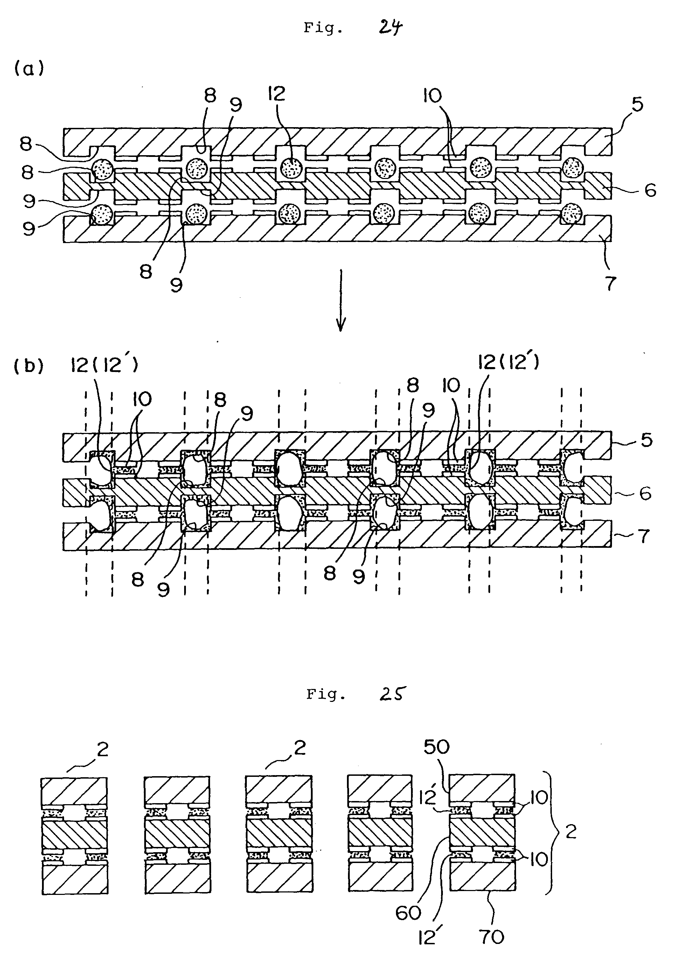

After the above-mentioned metallized film forming step, a soldering material 12 is placed in each of the first and the second grooves 8 and 9, and the polarizer material plate 5, the Faraday rotator material plate 6, and the analyzer material plate 7 are stacked so that the polarizing direction of the analyzer material plate 7 is inclined substantially at 45° with respect to the polarizing direction of the polarizer material plate 5, as shown in Fig. 24(a). In this condition, these optical material plates are put into a heat treatment furnace (not shown) to heat the soldering material 12. As shown in Fig. 24(b), the soldering material 12 heated to become a liquid phase flows into areas between the metallized films 10 faced to each other by the capillary action. Thereafter, when heating is stopped, the soldering material 12 is solidified to form the solder layer 12'. By the solder layer 12', the polarizer material plate 5, the Faraday rotator material plate 6, and the analyzer material plate 7 are bonded to one another at the portion of the metallized films 10. In this embodiment, the second grooves 9 are formed also on the surface of the analyzer material plate 7 facing the Faraday rotator material plate 6. Moreover, the second grooves are formed so as to face to the first grooves 8 when the polarizing direction of the analyzer material plate 7 is inclined substantially at 45° with respect to the polarizing direction of the polarizer material plate 5. Accordingly, once the polarizer material plate 5, the Faraday rotator material plate 6, and the analyzer material plate 7 are stacked so as to match the first grooves 8 and the second grooves 9, the polarizing direction of the analyzer material plate 7 is inclined substantially at 45° with respect to the polarizing direction of the polarizer material plate 5.

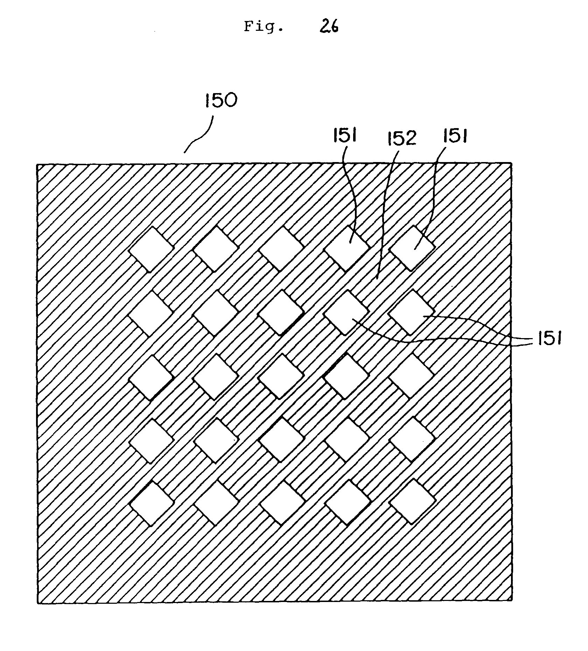

After the above-mentioned soldering step, the optical material plates 5, 6, and 7 soldered and bonded are cut along the first and the second grooves 8 and 9 as shown in Fig. 24(b). By this cutting step, a plurality of optical device assemblies 2 are cut off, as shown in Fig. 25, from the optical material plates soldered and bonded.

In this embodiment, the metallized films 10 are formed on the optical surfaces of the optical material plates 5, 6, and 7 so as to completely surround the regions to become apertures 11 of the optical material plates 5, 6, and 7. With this structure, the surroundings of the apertures 11 are entirely shielded by the metallized films 10 and the solder layers 12' in the side view of the optical material plates 5, 6, and 7 soldered and bonded, Therefore, no such opening is formed that communicates with the spaces formed at the portion of each aperture 11. Thus, when the optical material plates 5, 6, and 7 soldered and bonded are cut, no foreign substances such as cutting powder, cooling water, and a fixing brazing material intrude into the space formed at the portion of each aperture 11.

In this embodiment, in order to increase the adhesive strength among the optical material plates 5, 6, and 7 so as to improve the reliability, an antireflection film formed on the surface of each of the optical material plates 5, 6, and 7 is etched by sputtering except for the regions to become apertures 11 and thereafter, the metallized film 10 is formed by sputtering. If a photo-resist film is used in the sputter-etching, as a mask for the regions to become the apertures 11, the photo-resist film can not bear the sputter-etching. Accordingly, in the sputter-etching, it is necessary to use a metal mask. The metal mask is also used in forming the metallized film by sputtering. However, by the use of the conventional metal mask, it is impossible to form the metallized film in such a configuration that completely surrounds the regions to become the apertures. This is because the metal mask is required to have the bridge portions for supporting the mask portions covering the apertures and the metallized film is not formed on those portions of the optical material plates which are adjacent to the bridge portions. In this respect, the present inventor has found out the solution as a result of his zealous study. Specifically, it has been found out that, by forming the metal mask so that the bridge portions of the metal mask are separated from the optical surface in the state that the mask portions covering the apertures are brought into contact with the optical surface of the optical material plate, the metallized film is also formed on areas of the optical surface just under the bridge portions. The metallized film is thus formed because, if the bridge portions are slightly separated from the optical surface, particles flying from the plating material move around to the underside of the bridge portions to be attached also to the areas of the optical surface just under the bridge portions.

In order to confirm the effectiveness of this embodiment, optical device assemblies were manufactured by a production method (hereinunder referred to as "comparative example") which is partially different in step from this embodiment. Between this embodiment and the comparative example, only the metal masks for use in the metallized film forming step are different and the other steps are identical.

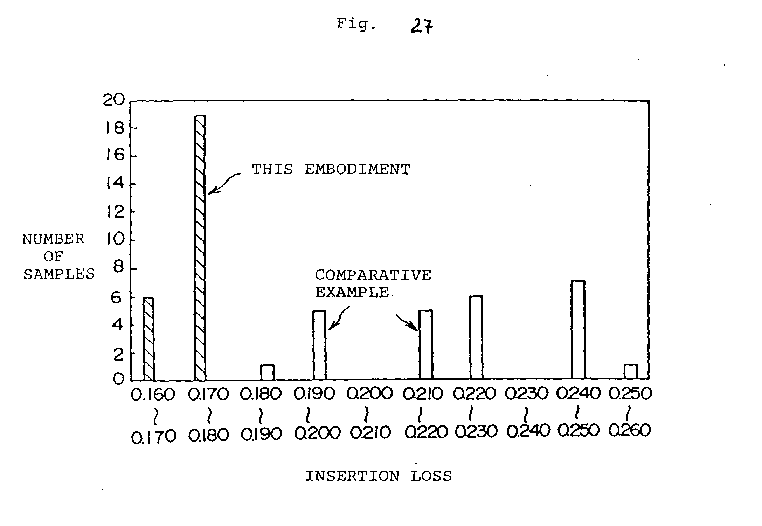

The metal mask used in the comparative example is shown in Fig. 26. and serves to form the metallized film on the four corners each square section of the optical surface (not shown). In Fig. 26, unhatched portions of the metal mask 150 represent openings 151 used to form the metallized film on the optical surface. Each hatched portion surrounded by the openings 151 is a mask portion 152 for covering the region to become each aperture. The openings 151 has a square shape with the length of its diagonal equal to 1.5mm. The metallized film 10 formed by the use of the metal mask is illustrated in Fig. 32.

Each of the optical device assemblies manufactured by this embodiment and the comparative example was fixed within a magnet in order to compare the insertion loss.

Fig. 27 shows a histogram of the insertion loss in both of the optical isolator (hereinafter referred to as "an optical isolator in connection with this embodiment") using the optical device assembly obtained by this embodiment and the optical isolator (hereinafter referred to as "an optical isolator according to the comparative example") using the optical device assembly obtained by the comparative example.

Light transmission loss of a crystal itself is equal to 0.01dB and 0.15dB per one piece of rutile single crystal and per one piece of garnet single crystal. Accordingly, three crystal pieces have the loss of 0.17dB. Most of the excess loss results from foreign substances such as cutting powder, water scale, and a brazing material.

As apparent from Fig. 27. the loss is great and fluctuates in the optical isolators according to the comparative example. On the other hand, the loss substantially corresponds to that of the crystals themselves and is generally uniform.

It will therefore be understood that no foreign substance exists in the spaces formed in the apertures and that this embodiment exhibits a satisfactory effect.

It is noted here that the characterizing part of this embodiment resides in that the metallized film is formed so as to completely surround the regions to become the apertures and that the metallized film forming step is not restricted to the metallized film forming step by sputtering as described in this embodiment. As the other methods of forming a metallized film, use may be made of, for example, a photo-etching method in which a photo-resist pattern is formed on a metallized film formed on the entire optical surface and thereafter unnecessary portions of the metallized film are removed by etching. Alternatively, use may be made of a lift-off method in which a photo-resist is preliminarily formed on a portion of the optical surface on which the metallized film need not be formed, thereafter, th metallized film is formed on the entire optical surface, and the resist film and the metallized film formed thereon are removed.

In addition, the metal mask used in the metallized film forming step of this embodiment is only exemplary. The metal mask to be used in this invention is not restricted to the configuration of the metal mask used in this embodiment as far as the bridge portion is separated from the optical surface during sputtering. Furthermore, the configuration of the aperture may be a polygon and an ellipse other than a circle. Thus, the configuration of the aperture is not limited to that of this embodiment.

### Industrial Applicability

This invention is excellent as a method of production of an optical device assembly for an optical isolator for use in an optical communication system including a semiconductor laser as a light source, an optical appliance using a semiconductor laser, and so on.

## Claims

1. A method of production of a plurality of optical device assemblies (2) for an optical isolator, each assembly (2) comprising at least three optical devices including a polarizer (50), a Faraday rotator (60), and an analyzer (70) which are aligned on a single optical axis, said method comprising:
preparation of at least three optical material plates including a polarizer material plate (5) capable of being cut into a plurality of said polarizers (50), a Faraday rotator material plate (6) capable of being cut into a plurality of said Faraday rotators (60), and an analyzer material plate (7) capable of being cut into a plurality of said analyzers (70);
a metallized film forming step of forming a metallized film (10) in a portion except for regions to become light transmission apertures (11) in each of an optical surface (5a) of said polarizer material plate (5) that faces said Faraday rotator material plate (6), optical surfaces (6a, 6b) of said Faraday rotator material plate (6) facing said polarizer material plate (5) and said analyzer material plate (7), and an optical surface (7a) of said analyzer material plate (7) that faces said Faraday rotator material plate (6) ;
a soldering step of stacking, after said metallized film forming step, said optical material plates so that a polarizing direction of said analyzer material plate (7) is inclined substantially at an angle of 45° with respect to a polarizing direction of said polarizer material plate (5) and soldering said optical material plates to one another at a portion of said metallized film (10) formed on each of said optical surfaces; and
a cutting step of cutting, after said soldering step, said optical material plates into a plurality of said optical device assemblies (2).

2. A method as claimed in Claim 1, said method additionally comprising, before said soldering step, a groove forming step of forming first grooves (8) on at least one of said optical surface (5a) of said polarizer material plate facing said Faraday rotator material plate (6) and said optical surface (6a) of said Faraday rotator material plate facing said polarizer material plate (5) to divide each of said optical material plates into pieces each forming one of said optical device assemblies (2) and forming second grooves (9) having a pattern similar to that of said first grooves (8) on at least one of said optical surface (6b) of said Faraday rotator material plate facing said analyzer material plate (7) and said optical surface (7a) of said analyzer material plate facing said Faraday rotator material plate (6); said optical material plates being cut along said first and said second grooves in said cutting step.

3. A method as claimed in Claim 2, wherein said metallized film forming step is carried out after said groove forming step, said metallized films (10) being also formed on wall surfaces defining said first and said second grooves (8, 9) in said metallized film forming step, said first and said second grooves (8, 9) being cut at center portions thereof so that portions including said wall surfaces (80, 90) on which said metallized films are formed remain as step portions (51, 61, 71) on side surfaces of each of said optical device assemblies.

4. A method as claimed in Claim 1 or 2, wherein, in said soldering step, said optical material plates are stacked so that an optical axis passing through the same point of said aperture (11) formed in each of said optical material plates within a region defined by said metallized film (10) is inclined with respect to a straight line orthogonal to said optical surfaces, said optical material plates being soldered to one another in the above-mentioned state at portions of said metallized films (10), said optical material plates being cut along said optical axis in said cutting step.

5. A method as claimed in Claim 1 or 2, wherein said soldering step is followed by a surface modifying step of applying a surface modifying agent having water repellency on an optical surface of each of said optical material plates, said surface modifying step being followed by said cutting step.

6. A method as claimed in Claim 5, wherein said surface modifying agent for use in said surface modifying step is a silane coupling agent or fluoroalkylsilane.

7. A method as claimed in Claim 1 or 2, wherein said metallized film (10) is formed in said metallized film forming step so that said aperture (11) formed in a range defined by said metallized film (10) is completely surrounded by said metallized film (10).

8. A method as claimed in Claim 7, wherein a metal mask (140) for use in forming said metallized film in said metallized film (10) forming step comprises mask portions (141) for covering regions to become said apertures (11) and bridge portions (142) for connecting said mask portions (141) to one another, said bridge portions (142) being formed so as to be separated from said optical surface when said mask portions (141) cover the regions to become said apertures (11).

## Patentansprüche

1. Verfahren zur Herstellung einer Mehrzahl von optischen Anordnungen (2) für einen optischen Isolator, wobei jede Anordnung (2) mindestens drei optische Einrichtungen einschließlich eines Polarisators (50), eines Faradayrotators (60) und eines Analysators (70) aufweist, die auf einer einzigen optischen Achse ausgerichtet sind, mit:
Vorbereiten von mindestens drei optischen Materialplatten einschließlich einer Polarisatormaterialplatte (5), die in eine Mehrzahl von Polarisatoren (50) geschnitten werden kann, einer Faradayrotatorplatte (6), die eine Mehrzahl der Faradayrotatoren (60) geschnitten werden kann, und einer Analysatormaterialplatte (7), die in eine Mehrzahl von Analysatoren (70) geschnitten werden kann;
einem Metallfilmbildungsschritt des Bildens eines metallischen Filmes (10) in einem Abschnitt, mit der Ausnahme der Bereiche, die Lichtdurchlaßöffnungen (11) werden sollen, in jeder von einer optischen Oberfläche (5a) der Polarisatormaterialplatte (5), die der Faradayrotatormaterialplatte (6) zugewandt ist, von optischen Oberflächen (6a, 6b) der Faradayrotatormaterialplatte (6), die der Polarisatormaterialplatte (5) und der Analysatormaterialplatte (7) zugewandt sind, und von einer optischen Oberfläche (7a) der Analysatormaterialplatte (7), die der Faradayrotatormaterialplatte (6) zugewandt ist;
einem Lötschritt des Aufeinanderstapelns der optischen Materialplatten nach dem Metallfilmbildungsschritt so, daß eine Polarisationsrichtung der Analysatorplatte (7) im wesentlichen unter einem Winkel von 45° in Bezug auf eine Polarisationsrichtung der Polarisatormaterialplatte (5) geneigt ist, und des Lötens der optischen Materialplatten aneinander an einem Abschnitt des auf jeder der optischen Oberfläche gebildeten metallischen Filmes (10); und
einem Schneideschritt des Schneidens der optischen Materialplatten nach dem Lötschritt in eine Mehrzahl der optischen Anordnungen (2).

2. Verfahren nach Anspruch 1, wobei das Verfahren zusätzlich einen Rillenbildungsschritt vor dem Lötschritt des Bildens erster Rillen (8) auf mindestens einer der optischen Oberfläche (5a) der Polarisatormaterialplatte, die der Faradayrotatormaterialplatte (6) zugewandt ist, und der optischen Oberfläche (6a) der Faradayrotatormaterialplatte, die der Polarisatormaterialplatte (5) zugewandt ist, zum Unterteilen jeder der optischen Materialplatten in Stücke, von denen jedes eine der optischen Anordnungen (2) bildet, und des Bildens zweiter Rillen (9) mit einem Muster ähnlich zu dem der ersten Rillen (8) auf mindestens einer der optischen Oberfläche (6b) der Faradayrotatormaterialplatte, die der Analysatormaterialplatte (7) zugewandt ist, und der optischen Oberfläche (7a) der Analysatormaterialplatte, die der Faradayrotatormaterialplatte (6) zugewandt ist, aufweist; wobei die optischen Materialplatten entlang der ersten und zweiten Rillen in dem Schneideschritt geschnitten werden.

3. Verfahren nach Anspruch 2, bei dem der Metallfilmbildungsschritt nach dem Rillenbildungsschritt ausgeführt wird, die metallischen Filme (10) ebenfalls auf Wandoberflächen, die die erste und zweite Rillen (8, 9) abgrenzen, in dem Metallfilmbildungsschritt gebildet werden, die ersten und zweiten Rillen (8, 9) an ihren Mittelabschnitten so geschnitten werden, daß Abschnitte, die die Wandoberflächen (80, 90) enthalten, auf denen die metallischen Filme gebildet sind, als Stufenabschnitte (51, 61, 71) auf Seitenoberflächen einer jeden der optischen Anordnungen verbleiben.

4. Verfahren nach Anspruch 1 oder 2, bei dem in dem Lötschritt die optischen Materialplatten so gestapelt werden, daß eine optische Achse, die durch den gleichen Punkt der Öffnungen (11) geht, die in jeder der optischen Materialplatten in einem durch den metallischen Film (10) abgegrenzten Bereich gebildet ist, in Bezug auf eine gerade Linie senkrecht zu den optischen Oberflächen geneigt ist, wobei die optischen Materialplatten aufeinander in dem oben erwähnten Zustand an Abschnitten der metallischen Filme (10) gelötet werden und die optischen Materialplatten entlang der optischen Achse in dem Schneideschritt geschnitten werden.

5. Verfahren nach Anspruch 1 oder 2, bei dem auf den Lötschritt ein Oberflächenmodifizierungsschritt des Anbringens eines eine Oberfläche modifizierenden Mittels mit Wasserabstoßung auf einer optischen Oberfläche einer jeden der optischen Materialplatten folgt, wobei der die Oberfläche modifzierende Schritt von dem Schneideschritt gefolgt wird.

6. Verfahren nach Anspruch 5, bei dem das die Oberfläche modifizierenden Mittel zur Benutzung in dem Oberflächenmodifikationsschritt ein Silankopplungsmittel oder Fluoralkylsilan ist.

7. Verfahren nach Anspruch 1 oder 2, bei dem der metallische Film (10) in dem Metallfilmbildungsschritt so gebildet wird, daß die Öffnungen (11), die in einem durch den metallischen Film (10) definierten Bereich gebildet werden, vollständig von dem metallischen Film (10) umgeben werden.

8. Verfahren nach Anspruch 7, bei dem eine Metallmaske (140) zur Benutzung bei dem Bilden des metallischen Filmes in dem Metallfilmbildungsschritt Maskenabschnitte (141) zum Bedecken der Bereiche, die die Öffnungen (11) werden, und Brückenabschnitte (142) zum Verbinden der Maskenabschnitte (141) miteinander aufweist, wobei die Brückenabschnitte (142) so gebildet werden, daß sie von der optischen Oberfläche getrennt sind, wenn die Maskenabschnitte (141) die Bereiche bedecken, die die Öffnungen (11) werden.

## Revendications

1. Procédé de fabrication d'un certain nombre d'ensembles (2) de dispositifs optiques pour un isolateur optique, chaque ensemble (2) comportant au moins trois dispositifs optiques comprenant un polariseur (50), un rotateur de Faraday (60) et un analyseur (70), qui sont alignés sur un même axe optique,
comprenant :
- la préparation d'au moins trois plaques de matériau optique comprenant une plaque de matériau de polariseur (5) pouvant être coupée en un certain nombre des polariseurs (50), une plaque de matériau de rotateur de Faraday (6) pouvant être coupée en un certain nombre des rotateurs de Faraday (60), et une plaque de matériau d'analyseur (7) pouvant être coupée en un certain nombre des analyseurs (70) ;
- une étape de formation d'un film métallisé (10) dans une partie de surface à l'exception des zones destinées à devenir des ouvertures de transmission de lumière (11), dans chacune des surfaces comprenant une surface optique (5a) de la plaque de matériau de polariseur (5) qui est tournée vers la plaque de matériau de rotateur de Faraday (6), des surfaces optiques (6a, 6b) de la plaque de matériau de rotateur de Faraday (6) qui sont tournées vers la plaque de matériau de polariseur (5) et vers la plaque de matériau d'analyseur (7), et une surface optique (7a) de la plaque de matériau d'analyseur (7) qui est tournée vers la plaque de matériau de rotateur de Faraday (6) ;
- une étape d'empilement et de soudage, après l'étape de formation du film métallisé, pour empiler les plaques de matériau optique de façon que la direction de polarisation de la plaque de matériau d'analyseur (7) soit inclinée essentiellement d'un angle de 45° par rapport à la direction de polarisation de la plaque de matériau de polariseur (5), et pour souder les plaques de matériau optique les unes aux autres dans une partie du film métallisé (10) formé sur chacune des surfaces optiques ; et
- une étape de coupe, après l'étape de soudage, pour couper les plaques de matériau optique en un certain nombre des ensembles (2) de dispositifs optiques.

2. Procédé selon la revendication 1,
comprenant en outre
avant l'étape de soudage, une étape de formation de rainures pour former des premières rainures (8) sur l'une au moins de la surface optique (5a) de la plaque de matériau de polariseur qui est tournée vers la plaque de matériau de rotateur de Faraday (6), et de la surface optique (6a) de la plaque de matériau de rotateur de Faraday qui est tournée vers la plaque de matériau de polariseur (5), pour diviser chacune des plaques de matériau optique en pièces individuelles formant chacune l'un des ensembles (2) de dispositifs optiques, et pour former des secondes rainures (9) ayant une configuration analogue à celle des premières rainures (8), sur l'une au moins de la surface optique (6b) de la plaque de matériau de rotateur de Faraday qui est tournée vers la plaque de matériau d'analyseur (7), et de la surface optique (7a) de la plaque de matériau d'analyseur qui est tournée vers la plaque de matériau de rotateur de Faraday (6) ; les plaques de matériau optique étant coupées le long des premières et des secondes rainures, dans l'étape de coupe.

3. Procédé selon la revendication 2,
dans lequel
l'étape de formation de film métallisé est effectuée après l'étape de formation de rainures, les films métallisés (10) étant également formés sur des surfaces de paroi définissant les premières et les secondes rainures (8, 9) dans l'étape de formation de film métallisé, la première et seconde rainure (8, 9) étant coupées dans leurs parties centrales de façon que des parties incluant les surfaces de paroi (80, 90) sur lesquelles les films métallisés sont formés, restent sous la forme de parties de marches (51, 61, 71) sur les surfaces latérales de chacun des ensembles de dispositifs optiques.

4. Procédé selon la revendication 1 ou 2,
dans lequel
dans l'étape de soudage, les plaques de matériau optique sont empilées de façon qu'un axe optique passant par le même point de l'ouverture (11) formée dans chacune des plaques de matériau optique, à l'intérieur d'une zone définie par le film métallisé (10), soit incliné par rapport à une droite perpendiculaire aux surfaces optiques, les plaques de matériau optique étant soudées les unes aux autres dans l'état indiqué ci-dessus, à l'endroit des parties des films métallisés (10), et les plaques de matériau optique étant coupées le long de cet axe optique dans l'étape de coupe.

5. Procédé selon la revendication 1 ou 2,
dans lequel
l'étape de soudage est suivie par une étape de modification de surface consistant à appliquer un agent de modification de surface repoussant l'eau, sur une surface optique de chacune des plaques de matériau optique, cette étape de modification de surface étant suivie par l'étape de coupe.

6. Procédé selon la revendication 5,
dans lequel
l'agent de modification de surface destiné à être utilisé dans l'étape de modification de surface, est un agent de couplage en silane ou en fluoroalkylsilane.

7. Procédé selon la revendication 1 ou 2,
dans lequel
le film métallisé (10) est formé dans l'étape de formation de film métallisé de façon que l'ouverture (11) formée dans une plage définie par le film métallisé (10), soit complètement entourée par le film métallisé (10).

8. Procédé selon la revendication 7,
dans lequel
un masque de métal (140) destiné à être utilisé pour former le film métallisé (10) dans l'étape de formation de film métallisé, comprend des parties de masque (141) pour recouvrir les zones destinées à devenir les ouvertures (11), et des parties de pont (142) pour connecter les parties de masque (141) les unes aux autres, les parties de pont (142) étant formées de manière à être séparées de la surface optique lorsque les parties de masque (141) recouvrent les zones destinées à devenir les ouvertures (11).
